# EUROPEAN PATENT APPLICATION

(11) **EP 3 395 691 A1**
(43) Date of publication of application: **31.10.2018**
(21) Application number: 17380012.9
(22) Date of filing: 25.04.2017
(51) Int. Cl.: B64F 1/31

(54) **APRON GATE AT AN AIRPORT**

(71) Applicant: thyssenkrupp Airport Solutions S.A., 33682 Mieres, Asturias (ES); thyssenkrupp AG, 45143 Essen (DE)
(72) Inventor: Espina, Manuel Hernández, 33423 Pruvia; Asturias (ES); Bermejo, Antonio Murias, 33208 Gijón, Asturias (ES); Ortega, Jairo Granda, 33208 Gijon, Asturias (ES); Pemán, Alejandro Viesca, 33420 Lugones, Asturias (ES)
(74) Representative: thyssenkrupp Intellectual Property GmbH

(57) **Abstract**

Apron gate (10)), in particular at an airport (1), comprising
an apron gate building (11) located on the apron (4) of an airport (1),
a passenger boarding bridge (7) for connecting the apron gate building (11) to an aircraft (8), the apron gate (10) being movable between different positions (24, 25, 26) on the apron (4).

## Description

The invention refers to an apron gate at an airport.

The airport traffic is steadily increasing. Besides the number aircraft movement as well as the degree of capacity utilization of the aircraft is increasing. This leads to more demand on passenger handling capacities at the airports.

At the same time there is a requirement on reducing the time, which the aircraft spends on the ground, for increasing the profitability of an aircraft and to reduce the delays.

The most comfortable way for boarding an aircraft is via a passenger boarding bridge ("PBB"), which are attached to the terminal building. The passenger can enter the aircraft via a weather-proofed walkway. Alternatively aircrafts are standing on a remote apron position ("remote boarding"). Remote boarding is perceived as being uncomfortable by most passengers, because the passengers are exposed to weather and the bus ride is often uncomfortable in the fully occupied buses. For small aircraft all passengers are transported by one bus. The time efficiency depends on the availability of the buses; when a bus is not available the time consuming unboarding of the aircraft cannot even start before the arrival of the bus; thereby the passengers have to wait in the aircraft which causes dissatisfaction of the passengers. Also in the other way round when the bus arrives the arrive at the aircraft, but the aircraft is not ready for boarding the passengers have to wait uncomfortably in the bus. Even for boarding on remote apron positions a waiting area at the main terminal building has to be employed.

The terminal 1 of Munich airport comprises a number of apron jet bridges ("Munich apron jet bridge") fixedly standing in the middle of the apron. Each apron jet bridge comprises a PBB. Passengers are transferred by a bus from the main terminal building to the apron jet bridge. Here the passengers leave the bus and enter a weather-proof entrance area of the apron jet bridge, leading directly to an escalator and the PBB. The passengers are brought to the bridge just in time for entering the aircraft. These apron jet bridges enable at least, that the passenger is always under a roof and thus not exposed to snow and rain and heavy wind.

The object of the invention is to provide enhanced airport facilities to improve the boarding and unboarding process. This object is solved by the subject of the independent claims; embodiments of the invention are disclosed in the subclaims and the description.

The inventive apron gate at an airport, comprising an apron gate building positioned on the apron of an airport, a, in particular exactly one, PBB for connecting the apron gate building to an aircraft. Usually the apron gate further comprises a bus station and a bus terminal adapted to provide a roofed transit for passengers between the bus and the gate building. The apron gate is movable between a first position and a second position on the apron.

The apron is meant the area of an airport where an aircraft can be parked, unloaded/loaded, refueled and/or boarded. Usually the apron is not open to the general public. Differentiating is made between the terms apron, taxiway and runway. The runway is used for takeoff and landing; the taxiway is the connecting path between the apron and the runway.

With the help of the mobile apron gates the airport architecture can easily be adapted to changing passenger volumes. In particular, during holiday seasons the passenger volume is rapidly increasing at the last day of school. Airports which operating at the capacity limit can use surfaces of the apron, which are usually used for airfreight or maintenance, temporarily for boarding and unboarding. Thereby the comfort compared to conventional remote boarding is increased because the passengers are transported to the apron gate building which provides a weather proof refuge area for the passengers. Also the passengers can be transported to the aircraft already at a time, when the aircraft is not fully prepared for boarding yet. When the aircraft is ready for boarding all passengers may already be available at the PBB. In a preferred operating mode no separate waiting area at the main terminal building needs to be provided for the remote boarding flights. So without increasing the capacities of the main terminal building the overall capacities of the airport can be temporarily increased. Also the amount of buses can be optimized since the bus will just take and drop the passengers without being used as waiting room. Less buses means, less traffic and therefore less time for turns around.

In a preferred embodiment the apron gate comprises a passenger waiting area having in particular seats, in particular more than 30 seats.

In particular the apron gate provides a weather-proof transit between the gate building and a aircraft docked via the PBB to the apron gate.

In an embodiment the PBB comprises a tunnel, wherein the tunnel is rotatably connected to the apron gate building by a rotunda, wherein the rotunda and the apron gate building are based one same apron gate platform, which is separate to an apron ground. By moving the gate platform the apron building and the rotunda of the PBB can be collectively moved. The other end of the PBB may be supported by a drive mechanism. This enables, that the apron gate can be moved to any other location.

In an embodiment the apron gate building comprises drive means for enabling a movement of the apron gate building. Here the apron gate is self-driving. In another embodiment the apron gate comprises attachment means, in particular a tow-hook for attaching a traction device, in particular an aircraft tug. Here the apron gate can be towed to another position by the external traction device. An aircraft tug, usually used for towing and/or pushing an aircraft, is available at each airport. Provided with suitable attachment means the range of use of the already available aircraft tug can be extended. The apron gate may additionally be provided with braking means. This may be any device which secures the apron gate in its current position.

In an embodiment the gate platform, the apron gate building, the rotunda and/or the apron gate platform can be raised or lowered. This may serve to achieve the required height to ease the transition between the apron gate building and the aircraft through the tunnels with an admissible slope.

The invention refers also to an airport, comprising at least one apron gate according to the prescribed kind.

The inventive method for operating an airport comprising the steps of disconnecting a first aircraft from the apron gate, wherein the apron gate is located at a first position; and moving the apron gate from the first position to a separate second position.

The second position may be another parking position of an aircraft, wherein the method comprising subsequently the step of connecting a second aircraft at the second position to the apron gate.

Alternatively the second position is a stowage position for apron gates, where no aircraft is parked and/or can be parked.

In an embodiment the apron gate is moved by a separate traction device, in particular a tug, coupled to the apron gate for movement and decoupled after movement.

In an embodiment an aircraft tug is used as a traction device for moving the apron gate between the first and the second position.

All embodiments described in connection with the apron gate are also applicable to the method.

The invention is described in more detail with reference to the figures, herein shows
- figure 1: a general map of an inventive airport;
- figure 2: a side view of an inventive apron gate.

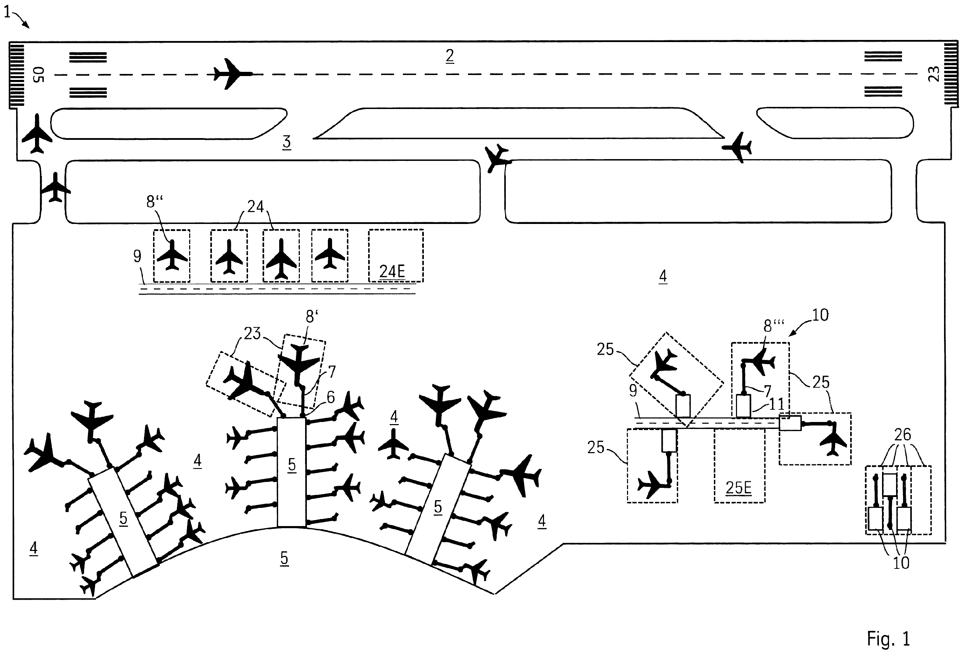

In figure 1 an inventive airport 1 is shown. As usual the airport 1 comprises several different parking positions 23, 24, 25. A group of terminal parking positions 23 is located at a main terminal building 5. The main terminal 5 building having a plurality of gates 6, which are connected by a passenger boarding bridge ("PBB") 7 to an aircraft 8' standing one of the terminal parking positions 23. The airport comprises 1 a group of first remote parking positions 24, located on the apron 4, at which further aircrafts 8" are parked. For boarding these aircrafts 8" passengers are transferred via a bus traveling over bus lanes 9 from the main terminal building 5 to one of the parking positions 24 of the first remote group. The passengers then enter the aircraft 8" via a separate gangway (not shown).

The airport comprises further a runway 2 for take-off and landing, and a taxiway 3 as a connecting path between the runway 2 and the apron 4.

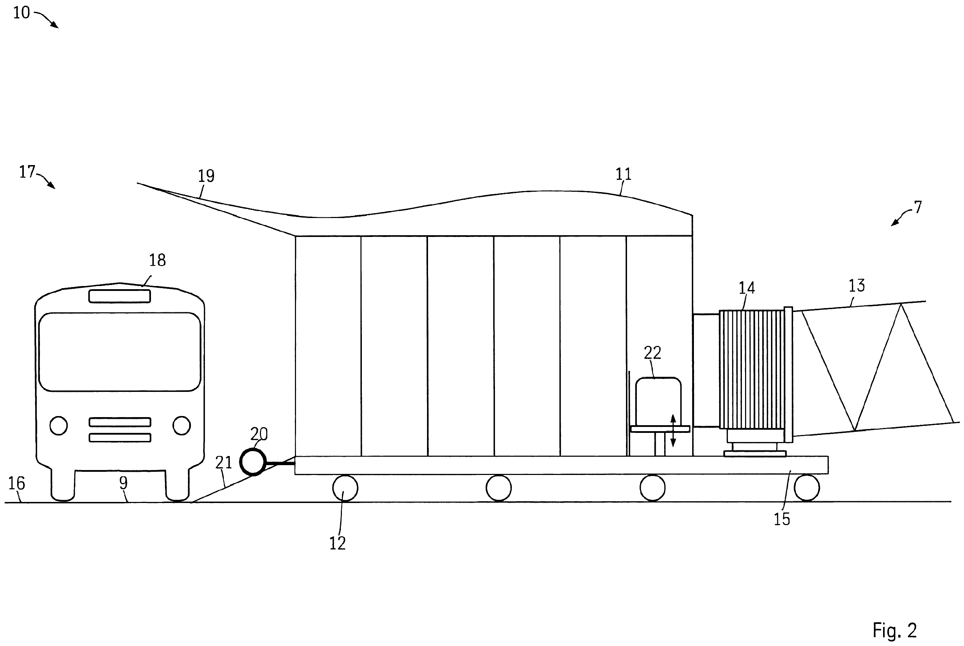

According to the invention the airport 1 comprises another remote parking positions 25 of a second remote group. Here apron gates 10 are provided, at which further aircrafts 8'" are parked. Each apron gate 10 has an apron gate building 11 and a PBB 7 connecting the aircraft 8'" with the apron gate building 11. Figure 2 shows details of an embodiment of the apron gate 10.

The PBB 7 comprises a tunnel 13, wherein the tunnel 13 is rotatably connected to the apron gate building 11 by a rotunda 14. The tunnel may comprise two or three tunnel sections, which may be telescopable. The rotunda 14 and the apron gate building 11 are based on one same apron gate platform 15, which is separate to the apron ground 16. By moving the apron gate platform 15 the apron building 11 and the rotunda 14 of the PBB can be collectively moved. The other end of the PBB 13 is as usually supported by a drive mechanism which during movement of the platform 15 follows the movement of the rotunda. The PBB 7 may be secured to the platform 15 during movement. Compared to the Munich apron jet bridge the location of the remote apron gate 10 can be used for other purposes when the inventive apron 10 gate is removed. In particular the apron gates 10 can be stored in an apron gate stowage position 26, having no parking positions for aircrafts, in a space saving manner. In the illustration of figure 1 one of four stowage positions 26 is not occupied by an apron gate 10.

Also it is possible to move the apron gate 10 to any other parking position of the same group or other groups to support boarding. For example 25E is a "empty" parking position of the second group of remote parking positions, where currently no apron gate is located, but which can be provided at any time with one the apron gates 10. For example 24E is a "empty" parking position of the first group of remote parking positions, where usually the aircrafts are boarded with a gangway; this parking position can be upgraded with an inventive apron gate 10. The positions 24E, 25E and 26 are considered as the second positions according to claim 8.

The apron gate building 11 is mounted on a movable apron gate platform 15. Drive means 12 comprising driven or undriven rollers or wheels are provided to mobilize the platform 1 relative to the apron ground 16. A tow hook 20 may be provided to connect the platform 15 to an aircraft tug (not shown). The rotunda 14 of the PBB 7 is also mounted on the platform 15, so when the platform 15 is moved the rotunda 14 is also moved. At the other end of the PBB (not shown) the PBB is supported by a drive means, standing on the apron ground 16.

Additionally the apron gate platform ca be provided with a non shown lifting mechanism to lift the complete apron gate to higher level. This enables the docking of larger aircrafts.

The apron gate 10 has a bus station 17 for accommodating a bus 18, comprising a bus stop roof 19, for providing a rain proof connection for the passengers from the bus 18 to the apron gate building 11. As figure 2 shows, by arranging the apron gates 10 or the at least the PBBs in appropriate orientations the aircrafts 8'" can leave the remote position at the apron gates 10 without the need of a pushback in a time and cost saving manner.

For supported handicapped people and to overcome level differences the apron gate 10 may be provided with a number of auxiliary devices such as a ramp 21, a platform lift 22 or an escalator (not shown).

### List or reference signs

- 1: airport
- 2: runway
- 3: taxiway
- 4: apron
- 5: main terminal building
- 6: gate
- 7: passenger boarding bridge
- 8: aircraft
- 9: bus lane
- 10: apron gate
- 11: apron gate building
- 12: drive means
- 13: tunnel
- 14: rotunda
- 15: apron gate platform
- 16: apron ground
- 17: bus station
- 18: bus
- 19: bus stop roof
- 20: tow-hook
- 21: ramp
- 22: platform lift
- 23: terminal parking position
- 24: remote parking positions of first remote group
- 25: remote parking position of second remote group
- 26: stowage position for apron gates

## Claims

1. Apron gate (10), in particular at an airport (1), comprising
an apron gate building (11) located on the apron (4) of an airport (1),
a passenger boarding bridge (7) for connecting the apron gate building (11) to an aircraft (8),
**characterized in**
**that** the apron gate (10) is movable between different positions (24, 25, 26) on the apron (4).

2. Apron gate according to the preceding claim,
wherein the passenger boarding bridge (7) comprises a tunnel (13), wherein the tunnel is rotatably connected to the apron gate building (11) by a rotunda (14), wherein the rotunda (14) and the apron gate building (11) are based a same apron gate platform (15), which is separate to an apron ground (16).

3. Apron gate according to any of the preceding claims,
wherein the apron gate platform (15), the apron gate building (11) and/or the rotunda the gate platform can be raised or lowered.

4. Apron gate (10) according to any of the preceding claims,
wherein the apron gate building (11) comprises drive means (12) for enabling a movement of the apron gate building (11).

5. Apron gate (10) according to any of the preceding claims,
wherein the apron gate (10) comprises attachment means, in particular a tow-hook (20), for attaching a traction device, in particular a tug.

6. Apron gate (10) according to any of the preceding claims,
a bus station (17) adapted to provide a roofed transit for passengers between a bus (18) and the apron gate building (11).

7. Airport (1), comprising at a main terminal building (5) and at least one apron gate (10) according to any of the preceding claims.

8. Method for operating an airport (1) according to claim 7 or method for using an apron gate (10) according to any of the claims 1 to 5, the method comprising the steps:
- disconnecting a first aircraft (8) from the apron gate (10) wherein the apron gate (10) is located at a first position (25), wherein the first position (25) is a parking position of a aircraft;
- moving the apron gate (10) from the first position to a separate second position (24E, 25E, 26);

9. Method according to the preceding claim,
wherein the second position is another parking position of an aircraft (24E, 25E), and
wherein the method comprising subsequently the step of connecting a second aircraft (8) at the second position (24E, 25E) to the apron gate (10).

10. Method according to claim 8 or 9,
wherein the second position is a stowage position (26) for apron gates (10), where no aircraft (8) is parked and/or can be parked.

11. Method according to any of claims 8 to 10,
wherein the apron gate (10) is moved by a separate traction device, in particular a tug, coupled to the apron gate (10) for movement and decoupled after movement.

12. Method according to any of claims 8 to 11,
using an aircraft tug as a traction device for moving the apron gate between the first and the second position.
